# EUROPÄISCHE PATENTSCHRIFT

(11) **EP 2 018 487 B1**
(45) Veröffentlichungstag und Bekanntmachung des Hinweises auf die Patenterteilung: **27.06.2012**
(21) Anmeldenummer: 07728756.3
(22) Anmeldetag: 03.05.2007
(51) Int. Cl.: F16C 29/06

(54) **LINEARWÄLZLAGER**
LINEAR ROLLER BEARING
ROULEMENT LINÉAIRE

(30) Priorität: 11.05.2006 DE 102006021932
(43) Veröffentlichungstag der Anmeldung: 28.01.2009
(73) Patentinhaber: Schaeffler Technologies AG & Co. KG, 91074 Herzogenaurach (DE)
(72) Erfinder: DANIEL, Patrick, 66459 Kirkel (DE)
(86) Internationale Anmeldenummer: PCT/EP2007/054303
(87) Internationale Veröffentlichungsnummer: WO 2007/131890

(56) Entgegenhaltungen:
- EP-A- 1 517 056
- WO-A-2007/057319
- DE-A1- 4 331 014
- DE-A1- 10 356 854
- US-A- 5 433 527

## Beschreibung

Die vorliegende Erfindung betrifft ein Linearwälzlager, bei dem ein Führungswagen auf einer Führungsschiene längsverschieblich geführt werden kann.

Aus DE 44 13 373 beispielsweise ist ein Linearwälzlager bekannt geworden, bei dem ein Führungswagen auf einer Führungsschiene längsverschieblich angeordnet ist. Der Führungswagen ist für einen endlosen Umlauf von Wälzkörpern mit mehreren endlosen Wälzkörperkanälen versehen. Jeder Wälzkörperkanal umfasst einen Lastabschnitt, einen Rücklaufabschnitt und zwei den Lastabschnitt mit dem Rücklaufabschnitt verbindende Umlenkabschnitte. In dem Lastabschnitt wälzen die Wälzkörper an Laufbahnen der Führungsschiene und des Führungswagens ab. Im Rücklaufabschnitt werden die Wälzkörper lastfrei zurückgeführt. In den Umlenkabschnitten werden die Wälzkörper von dem Lastabschnitt in den Rücklaufabschnitt oder umgekehrt umgelenkt. Jeder Umlenkabschnitt weist eine mit einer inneren Umlenkbahn versehene Innenumlenkung und eine mit einer äußeren Umlenkbahn versehene Außenumlenkung auf. Die Außenumlenkung ist an einem Kopfstück des Führungswagens aus Kunststoff einstückig angeformt. Die Innenumlenkung ist an einem separaten Kunststoffstück ausgebildet, das ebenso wie das Kopfstück stirnseitig an einem Tragkörper des Führungswagens befestigt ist. Insbesondere bei hohen Umlaufgeschwindigkeiten üben die umlaufenden Wälzkörper erhebliche Fliehkräfte auf die Umlenkabschnitte aus.

Die Wälzkörper müssen für den endlosen Umlauf nach Durchlaufen des Lastbereichs weg von der Führungsschiene und in den Umlenkbereich hinein gehoben werden. Zu diesem Zweck kann die Außenumlenkung mit einer Heberampe versehen sein, an der die Wälzkörper von der Führungsschiene abgehoben werden. Wenn das Kopfstück aus Kunststoff im Spritzverfahren hergestellt ist, wird üblicher Weise ein verschleißfester harter Kunststoff gewählt, der einwandfrei an dem Tragkörper befestigt werden kann. Die erwähnte Heberampe ist dann ebenfalls aus diesem verschleißfesten Kunststoff gebildet. Allerdings besteht hier das Risiko, dass diese Heberampe aufgrund ihrer Härte und Sprödigkeit bruchgefährdet ist. Insbesondere bei hohen Geschwindigkeiten der Wälzkörper besteht diese Bruchgefahr. Ein Bruch der Heberampe bzw. deren Verschleiß beeinträchtigt jedoch das Laufverhalten der Wälzkörper in dem Umlaufkanal, mit der Folge eines vorzeitigen Ausfalls des Linearwälzlagers.

Aufgabe der vorliegenden Erfindung ist es, ein Linearwälzlager nach den Merkmalen des Oberbegriffs des Anspruchs 1 anzugeben, das einfach herstellbar ist und bei dem eine einwandfreie Umlenkung der Wälzkörper insbesondere in den Umlenkabschnitten gewährleistet ist.

Erfindungsgemäß wird diese Aufgabe durch das Linearwälzlager gemäß Anspruch 1 gelöst.

Die Verwendung von zwei Werkstoffen mit unterschiedlichen Nachgiebigkeiten ermöglicht zum einen, dass das Kopfstück einwandfrei an dem Tragkörper befestigt werden kann. Denn das Trägerteil des Kopfstückes ist dann aus einem härteren Werkstoff mit der der kleineren Nachgiebigkeit gebildet. Das Trägerteil bildetet demzufolge ein Skelett, das dem Kopfstück seine mechanische Stabilität verleiht. Hier kann ein üblicher Weise verwendeter Kunststoff verwendet werden. Die Außenumlenkung hingegen, insbesondere mit der Heberampe ist erfindungsgemäß aus dem zweiten Werkstoff mit einer größeren Nachgiebigkeit gebildet.

Vorzugsweise kann für die Außenumlenkung der zweite Werkstoff eine Nachgiebigkeit aufweisen, die vom Betrag her größer als 0,15 ist. Für das Trägerteil ist vorzugsweise ein Werkstoff vorgesehen, dessen Nachgiebigkeit vom Betrag her kleiner als 0,15, vorzugsweise kleiner als 0,1 ist.

Sofern als Werkstoff ein Kunststoff vorgesehen ist, beziehen sich die Werte für die Bruchdehnung und die Bruchspannung auf Herstellerangaben, die üblicher Weise der ISO 527-1/-2 entsprechen.

Während für die Außenumlenkung üblicher Weise harte und verschleißfeste Kunststoffe bislang eingesetzt wurden, geht die Erfindung einen völlig anderen Weg. Der erfindungsgemäß vorgeschlagene Werkstoff, vorzugsweise Kunststoff ist deutlich weicher oder nachgiebiger als die für diesen Verwendungszweck bislang verwendeten Kunststoffe. Laufversuche unter Hochgeschwindigkeitsbedingungen haben gezeigt, dass die für die Außenumlenkung erfindungsgemäß vorgesehenen Werkstoffe aufgrund des vergleichsweise gummiartigen Werkstoffverhaltens Schläge der auftretenden Wälzkörper insbesondere im Umlenkbereich abdämpfen, ohne dass mit dieser Dämpfung nennenswerter Verschleiß einhergeht. Trotz einer möglicherweise reduzierten Zugfestigkeit des weicheren Werkstoffes hat sich herausgestellt, dass der Verschleiß insbesondere in der Umlenkung gegenüber bekannten Führungswagen deutlich reduziert ist. Die Gebrauchsdauer erfindungsgemäßer Linearwälzlager ist gegenüber bekannten Linearwälzlagern bei Hochgeschwindigkeitsanwendungen deutlich gesteigert.

Während der oben angegebene Nachgiebigkeitswert von 0,15 eine untere Grenze der Nachgiebigkeit bestimmt, ist eine obere Grenze der Nachgiebigkeit dadurch festgelegt, das keine plastischen Verformungen insbesondere der Außenumlenkung aufgrund der wirksamen Fliehkräfte eintreten.

Gute Ergebnisse wurden mit dem thermoplastischen Polyester Hytrel 5555HS der Firma DuPont als Material für die Außenumlenkung erzielt. Dieser Kunststoff wird vom Hersteller angegeben mit einer, Bruchspannung von ca. 42 Mpa und einer Bruchdehnung von etwa 520 %. Hier ergibt sich ein Quotient von etwa 12,3. Bei diesem erfindungsgemäß besonders geeigneten Werkstoff wird deutlich, dass die Bruchdehnung gegenüber bekannten - für die Fertigung von Umlenkabschnitten vorgesehenen - Kunststoffen sehr viel größer ist. Beispielsweise bei faserverstärktem PBT liegt die Bruchdehnung etwa bei 3 %.

Gute Versuchsergebnisse wurden mit Kunststoffen erzielt, deren Bruchspannung kleiner als 60 Mpa beträgt. Ebenso gute Ergebnisse wurden mit Kunststoffen beobachtet, deren Bruchdehnung größer als 10 % vorzugsweise größer als 100 % beträgt. Insbesondere Kunststoffe, deren Bruchspannung kleiner als 60 Mpa und deren Bruchdehnung größer als 100 % betragen, zeigen hervorragende Eigenschaften, die Fliehkräfte der Wälzkörper im Umlenkbereich aufzufangen, ohne dass ein nennenswerter Verschleiß an der Außenumlenkung festzustellen ist.

Für das Trägerteil kann hingegen ein Werkstoff vorgesehen werden, dessen Nachgiebigkeit vorzugsweise deutlich kleiner 0,15 ist. Beispielsweise ein glasfaserverstärkter PA66 kann hier Werte von etwa 0,07 erreichen. Diese steifen Werkstoffe eignen sich in günstiger Weise als Trägerstruktur für die weiche Außenumlenkung. Diese Trägerteile können in bekannter Weise problemlos an dem Tragkörper des Führungswagens befestigt werden.

Die bekannte Mehrkomponenten-Spritztechnik ermöglicht das Spritzen des erfindungsgemäßen Kopfstückes in einer gemeinsamen Spritzform mit zwei unterschiedlichen Kunststoffen, die den ersten und den zweiten Werkstoff bilden. Auf diese Weise ist ein Linearwälzlager gebildet, bei dem insbesondere bei Hochgeschwindigkeitsanwendungen sichergestellt ist, dass Schäden an der Außenumlenkung vermieden sind, wenn die Wälzkörper bei hohen Umlaufgeschwindigkeiten von der Führungsschiene abgehoben und an der Heberampe der Außenumlenkung in den Umlenkabschnitt hinein gehoben werden. Der Werkstoff für die Außenumlenkung wird so gewählt, dass eine hinreichende Elastizität bei ausreichender Formstabilität gewährleistet ist.

Die aus dem nachgiebigen oder weichen Material gebildete Außenumlenkung ermöglicht ein Abfedern des Wälzkörperimpulses, wenn die Wälzkörper bei hohen Geschwindigkeiten von der Führungsschiene abgehoben und in die Umlenkbahn hinein verlagert werden. Das Abfedern wird durch die Walkarbeit des elastischen Werkstoffes in der Umlenkung ermöglicht. Zugleich bietet der weichere Werkstoff den Vorteil einer Geräuschdämmung, sowie eine Verringerung des Verschleißes in dem Umlenkabschnitt.

Die elastische Ausführung der vorzugsweise einstückig an die Außenumlenkung angeformten Heberampe kann die Impulse der Wälzkörper aufgrund ihrer nachgiebigen Ausbildung gut aufnehmen.

Vorzugsweise liegt das Kopfstück mit seiner dem Tragkörper zugewandten Montageseite an der Stirnseite des Tragkörpers an. Die Montageseite des Kopfstückes ist dabei in vorteilhafter Weise an einer ebenfalls aus dem zweiten Werkstoff gebildeten Decklage gebildet, die an dem Trägerteil des Kopfstückes ausgebildet ist. Diese Decklage kann ebenfalls einwandfrei und ohne Schwierigkeiten im Mehrkomponenten-Spritzverfahren gemeinsam mit dem Trägerteil gespritzt werden. Diese weiche Decklage ist demzufolge zwischen der harten Komponente des tragenden Trägerteils des Kopfstückes und dem Tragkörper des Führungswagens angeordnet. Diese weiche Decklage bietet somit den Vorteil einer zusätzlichen Dämpfung des Gesamtsystems.

Neben dem bereits beschriebenen vorteilhaften Effekt der Geräuschdämmung und nachgiebigen Ausbildung der Heberampe ermöglicht die Anlage einer Dichtlippe der Heberampe unter Vorspannung an der Führungsschiene zudem, dass der Schmierstoff aus dem Umlaufkanal der Wälzkörper nicht mehr aus dem Wälzbereich ausgetragen wird. Gegebenenfalls können somit aufwendige Doppellippendichtungen als Zusatzelemente entfallen.

In allen oben genannten Fällen kann zusätzlich noch an dem Kopfstück in üblicher Weise ein Frontabstreifer ausgebildet sein. Dieser Frontabstreifer ist dann ebenfalls aus dem zweiten Werkstoff mit der größeren Nachgiebigkeit gebildet, wobei auch hier gilt, dass dieser Frontabstreifer in einem einzigen Arbeitsgang gemeinsam mit der Außenumlenkung und dem Trägerteil im Spritzverfahren im Mehrkomponenten-Spritzverfahren hergestellt werden kann.

Nachstehend wird die Erfindung anhand eines in insgesamt fünf Figuren abgebildeten Ausführungsbeispieles näher erläutert. Es zeigen:
- Figur 1: eine Draufsicht auf ein erfindungsgemäßes Linearwälzlager,
- Figur 2: einen Querschnitt durch das erfindungsgemäße Linearwälzlager,
- Figuren 3 bis 5: jeweils einen Teil des erfindungsgemäßen Linearwälzlagers mit unterschiedlichen Schnittanordnungen.

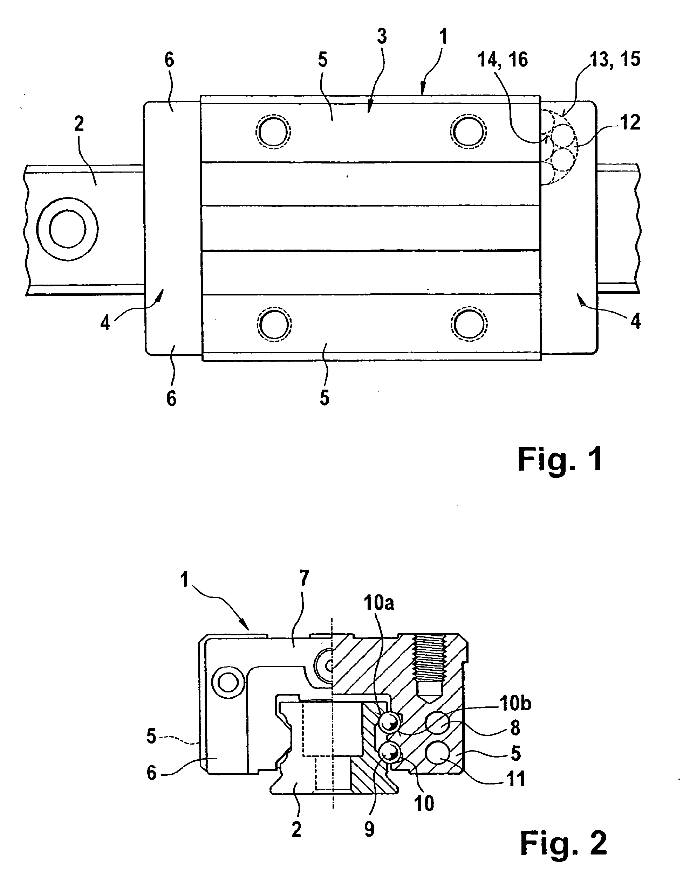

Das in den Figuren 1 bis 4 abgebildete erfindungsgemäße Linearwälzlager weist einen Führungswagen 1 auf, der auf einer Führungsschiene 2 längsverschieblich geführt ist. Der Führungswagen 1 umfasst einen Tragkörper 3 und stirnseitig an den Tragkörper 3 angeflanschte Kopfstücke 4 auf.

Der etwa U-förmig ausgebildete Führungswagen 1 umgreift mit seinen beiden Schenkel 5 die Führungsschiene 2 an ihren beiden Längsseiten. Jedes Kopfstück ist mit korrespondierenden Schenkelabschnitten 6 und einem die beiden Schenkelabschnitte 6 verbindenden Rücken 7 versehen.

Der Führungswagen 1 ist mit vier endlosen Umlaufkanälen 8 versehen, von denen jeweils zwei übereinander liegen und an einem Schenkel 5 des Führungswagens 1 ausgebildet sind. In jedem Umlaufkanal 8 laufen durch Kugeln gebildete Wälzkörper 9 endlos um. Der Umlaufkanal 8 weist einen Lastabschnitt 10, einen Rücklaufabschnitt 11, und zwei den Rücklaufabschnitt 11 mit dem Lastabschnitt 10 verbindende Umlenkabschnitte 12 auf. Der Lastabschnitt 10 und der Rücklaufabschnitt 11 sind in der Figur 2 abgebildet. Einer der Umlenkabschnitte 12 eines Schenkels 5 ist schematisch in der Figur 1 abgebildet, wobei jeder Umlenkabschnitt eine Außenumlenkung 13 und eine Innenumlenkung 14 aufweist, wobei die Außenumlenkung 13 mit einer äußeren Umlenkbahn 15 und die Innenumlenkung 14 mit einer inneren Umlenkbahn 16 versehen ist.

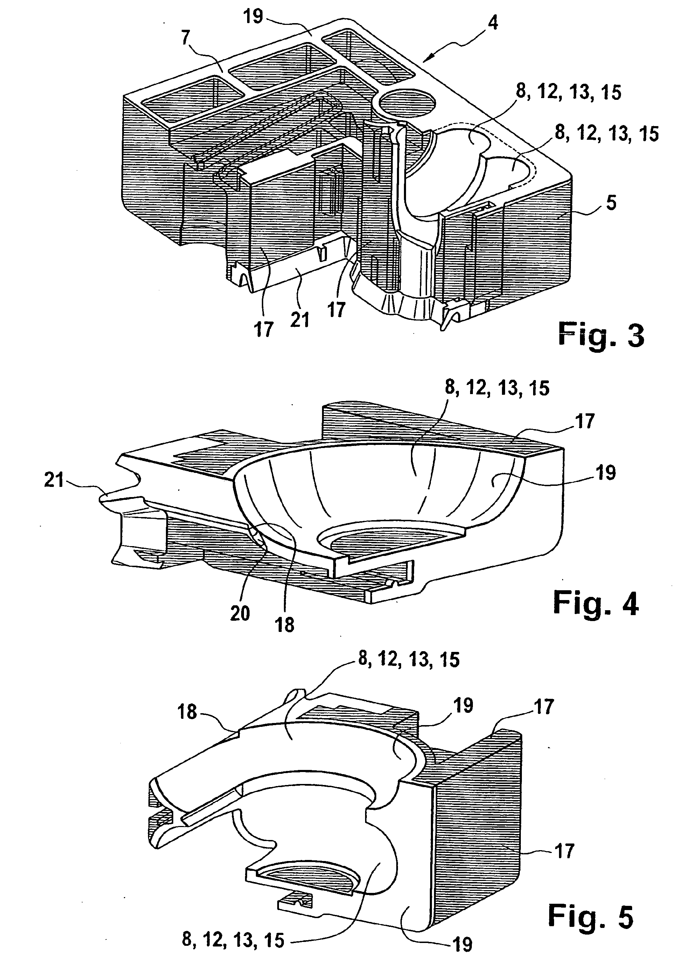

In den Figuren 3 bis 5 ist das Kopfstück 4 in verschiedenen Schnitten abgebildet und wird nachstehende näher erläutert.

Figur 3 zeigt einen der Schenkel 5 und einen Teil des geschnittenen Rückens 7. Dieses erfindungsgemäße Kopfstück 4 ist aus Kunststoff gebildet, wobei zwei Kunststoffe verwendet werden. Der erste Kunststoff ist ein erster Werkstoff mit einer kleineren Nachgiebigkeit und der zweite Kunststoff ist ein zweiter Werkstoff mit einer demgegenüber größeren Nachgiebigkeit gebildet.

In den Figuren 3 bis 5 ist der erste Kunststoff in grauen Schattierungen abgebildet. Der zweite Kunststoff mit der größeren Nachgiebigkeit ist in den Figuren 3 bis 5 hell (ohne Schattierung) abgebildet. Beispielsweise zeigt Figur 3, dass das Kopfstück 4 ein Trägerteil 17 aufweist, das aus dem ersten Werkstoff mit der kleineren Nachgiebigkeit gebildet ist. Die Außenumlenkung 13 ist aus dem zweiten Werkstoff mit der größeren Nachgiebigkeit gebildet. Im Ausführungsbeispiel ist der erste Kunststoff für das Trägerteil durch glasfaserverstärkten PA66 und der zweite Kunststoff für die Außenumlenkung durch thermoplastischen Polyester Hytrel 5555HS gebildet.

Das Kopfstück 4 ist an seiner dem Tragkörper 3 zugewandten Montageseite mit einer Decklage 19 versehen. Diese Decklage 19 ist ebenfalls aus dem zweiten Kunststoff - vorliegend Hytrel 5555HS - gebildet. Die Decklage 19 und die Außenumlenkung 13 sind im vorliegenden Ausführungsbeispiel einstückig miteinander verbunden. Es ist aber auch denkbar, dass in der gemeinsamen Spritzform die Decklage 19 nicht einstückig mit der Außenumlenkung 13 verbunden ist. Dennoch ist auch in diesem Fall gewährleistet, dass das Kopfstück in einem einzigen Arbeitsgang im Mehrkomponenten-Spritzverfahren gespritzt werden kann. Die Decklage 19 ist in der Figur 3 deutlich als unschattierte, helle Decke zu erkennen.

Figur 4 zeigt einen weiteren Schnitt durch das Kopfstück 4. In vergrößerter Abbildung ist hier eine Außenumlenkung 13 geschnitten dargestellt, wobei hier zu erkennen ist, dass die Außenumlenkung 13 als Teil der Decklage 19 an dem Trägerteil 17 angeformt ist. Ferner ist der Figur 4 zu entnehmen, dass eine Heberampe 18 versehen ist. Wenn der Führungswagen auf der Führungsschiene angeordnet ist, liegt diese Heberampe 18 mit einer Dichtlippe 20 unter leichter Vorspannung an der Laufbahn der Führungsschiene 2 an. Diese Dichtlippe 20 ermöglicht in vorteilhafter Weise, dass im Umlaufkanal 8 vorgesehenes Schmiermittel nicht oder nur reduziert austritt, da der Bereich des Übergangs von der Laufbahn der Führungsschiene in den Umlenkabschnitt 12 hinein geschützt ist. Diese Dichtlippe 20 ist ebenfalls aus dem zweiten Werkstoff mit der größeren Nachgiebigkeit gebildet und ebenfalls in dem gemeinsamen Spritzvorgang im Mehrkomponenten-Spritzverfahren hergestellt.

Sowohl in der Figur 3 als auch in der Figur 4 sind deutlich Frontabstreifer 21 zu erkennen, die an der von dem Tragkörper 3 abgewandten Stirnseite des Kopfstücks 4 vorgesehen sind, und die an der Führungsschiene 2 anliegen. Diese Frontabstreifer 21 sind ebenfalls aus dem zweiten Werkstoff mit der größeren Nachgiebigkeit gebildet. Auch dieser Frontabstreifer 21 kann bei der Herstellung des Kopfstückes 4 in einem einzigen Arbeitsgang im Mehrkomponenten-Spritzverfahren gebildet werden.

Die die Montageseite des Kopfstückes 4 angespritzte Decklage 19 bildete eine Zwischenlage, die zwischen dem üblicher Weise aus Stahl gebildeten Tragkörper des Führungswagens 1 und dem Trägerteil 17 des Kopfstückes 4 angeordnet ist. Da diese Decklage 19 aus dem weichen Kunststoff (zweiter Werkstoff mit der größeren Nachgiebigkeit) gebildet ist, wird eine Dämpfung des Gesamtsystems begünstigt; die Übertragung von Körperschall zwischen dem Kopfstück 4 und dem Tragkörper 3 ist durch die Decklage 19 deutlich reduziert.

Während bei dem hier abgebildeten erfindungsgemäßen Ausführungsbeispiel das Kopfstück im Mehrkomponenten-Spritzverfahren in einem einzigen Arbeitsgang hergestellt wurde, sind alternative erfindungsgemäße Kopfstücke auch herstellbar, wenn der Trägerteil und die Außenumlenkung als separate Teile hergestellt und anschließend miteinander verbunden werden. In erfindungsgemäßer Weise kann auch bei dieser abgewandelten erfindungsgemäßen Ausführungsform die Außenumlenkung aus dem zweiten Werkstoff mit der größeren Nachgiebigkeit und das Trägerteil aus dem ersten Werkstoff mit der kleineren Nachgiebigkeit gebildet werden.

In diesem Fall ist auch denkbar, das Trägerteil aus Metall, beispielsweise Stahl herzustellen und die Außenumlenkung aus Kunststoff an das Trägerteil anzuspritzen.

### Bezugszahlenliste

- 1: Führungswagen
- 2: Führungsschiene
- 3: Tragkörper
- 4: Kopfstück
- 5: Schenkel
- 6: Schenkelabschnitt
- 7: Rücken
- 8: Umlaufkanal
- 9: Kugel
- 10: Lastabschnitt
- 10a: Laufbahn
- 10b: Laufbahn
- 11: Rücklaufabschnitt
- 12: Umlenkabschnitt
- 13: Außenumlenkung
- 14: Innenumlenkung
- 15: äußere Umlenkbahn
- 16: innere Umlenkbahn
- 17: Trägerteil
- 18: Heberampe
- 19: Decklage
- 20: Dichtlippe
- 21: Frontabstreifer

## Patentansprüche

1. Linearwälzlager, mit einem auf einer Führungsschiene (2) verschiebbar wälzgelagerten Führungswagen (1), der einen Tragkörper (3) und an beiden Stirnseiten des Tragkörpers (3) je ein Kopfstück (4) aufweist, wobei Wälzkörper endlos in wenigstens einem endlosen Umlaufkanal (8) des Führungswagens (1) umlaufen, wobei der Umlaufkanal (8) einen Lastabschnitt (10) aufweist, in dem die Wälzkörper belastbar an Laufbahnen (10a, 10b) der Führungsschiene (2) und des Führungswagens (1) abwälzen, und einen Rücklaufabschnitt (11), in dem die Wälzkörper unbelastet rückgeführt werden, und zwei den Lastabschnitt mit dem Rücklaufabschnitt endlos verbindende Umlenkabschnitte (12), wobei zwischen einer Außenumlenkung (13) und einer Innenumlenkung (14) des Umlenkabschnittes (12) die Wälzkörper umgelenkt werden, und wobei die Außenumlenkung (13) an dem Kopfstück (4) vorgesehen ist, **dadurch gekennzeichnet, dass** das Kopfstück (4) ein Trägerteil (17) aufweist, das aus einem ersten Werkstoff mit einer kleineren Nachgiebigkeit und die an dem Trägerteil (17) vorgesehene Außenumlenkung (13) aus einem zweiten Werkstoff mit einer größeren Nachgiebigkeit gebildet ist, wobei die Nachgiebigkeit durch einen aus dem Verhältnis von Bruchdehnung zu Bruchspannung ermittelten Quotienten angegeben ist, wobei die Bruchdehnung in Prozent und die Bruchspannung in Megapascal angegeben sind, wobei das Trägerteil (17) als Trägerstruktur für die Außenumlenkung (13) vorgesehen ist.

2. Linearwälzlager nach Anspruch 1, bei dem der für die Außenumlenkung (13) vorgesehene zweite Werkstoff eine Nachgiebigkeit aufweist, die vom Betrag her größer als 0,15 ist.

3. Linearwälzlager nach Anspruch 1, bei dem der für das Trägerteil (17) vorgesehene erste Werkstoff eine Nachgiebigkeit aufweist, die vom Betrag her kleiner als 0,15, vorzugsweise kleiner als 0,1 ist.

4. Linearwälzlager nach Anspruch 1, bei dem das Kopfstück (4) aus Kunststoff im Mehrkomponenten-Spritzverfahren hergestellt ist, wobei die eine Komponente durch den ersten Werkstoff für das Trägerteil (17) und die andere Komponente durch den zweiten Werkstoff für die Außenumlenkung (13) gebildet ist.

5. Linearwälzlager nach Anspruch 1, bei dem das Kopfstück (4) mit seiner dem Tragkörper (3) zugewandten Montageseite an der Stirnseite des Tragkörpers (3) anliegt, wobei die Montageseite des Kopfstückes (4) an einer aus dem zweiten Werkstoff gebildeten Decklage (19) gebildet ist, die an dem Trägerteil (17) des Kopfstückes (4) ausgebildet ist.

6. Linearwälzlager nach Anspruch 1, bei dem die Außenumlenkung (13) eine Heberampe (18) aufweist, die bis auf die Laufbahn (10) der Führungsschiene (2) reicht.

7. Linearwälzlager nach Anspruch 6, bei dem die Außenumlenkung (13) an einer aus dem zweiten Werkstoff gebildeten Decklage (19) vorgesehen ist, die auf dem Trägerteil (17) befestigt ist.

## Claims

1. Linear anti-friction bearing, having a guide carriage (1) which is roller-mounted displaceably on a guide rail (2) and has a supporting body (3) and in each case one head piece (4) at the two end sides of the supporting body (3), rolling bodies circulating endlessly in at least one endless circulating channel (8) of the guide carriage (1), the circulating channel (8) having a load-bearing section (10), in which the rolling bodies roll on raceways (10a, 10b) of the guide rail (2) and of the guide carriage (1) such that they can be loaded, and a return section (11), in which the rolling bodies are returned in an unloaded state, and two deflection sections (12) which connect the load-bearing section to the return section endlessly, the rolling bodies being deflected between an outer deflection means (13) and an inner deflection means (14) of the deflection section (12), and the outer deflection means (13) being provided on the head piece (4), **characterized in that** the head piece (4) has a supporting part (17) which is formed from a first material with a lower elasticity and the outer deflection means (13) which is provided on the supporting part (1'7) is formed from a second material with a greater elasticity, the elasticity being specified by a quotient which is determined from the ratio of elongation at failure to stress at failure, the elongation at failure being specified in per cent and the stress at failure being specified in megapascals, the supporting part (17) being provided as supporting structure for the outer deflection means (13).

2. Linear anti-friction bearing according to Claim 1, in which the second material which is provided for the outer deflection means (13) has an elasticity, the magnitude of which is greater than 0.15.

3. Linear anti-friction bearing according to Claim 1, in which the first material which is provided for the supporting part (17) has an elasticity, the magnitude of which is less than 0.15, preferably less than 0.1.

4. Linear anti-friction bearing according to Claim 1, in which the head piece (4) is produced from plastic using the multi-component injection moulding process, one component being formed by the first material for the supporting part (17) and the other component being formed by the second material for the outer deflection means (13).

5. Linear anti-friction bearing according to Claim 1, in which the head piece (4) bears with its mounting side which faces the supporting body (3) against the end side of the supporting body (3), the mounting side of the head piece (4) being formed on a cover layer (19) which is formed from the second material and is configured on the supporting part (17) of the head piece (4).

6. Linear ant.i-Zriction bearing according to Claim 1, in which the outer deflection means (13) has a raising ramp (18) which reaches as far as the raceway (10) of the guide rail (2).

7. Linear anti-friction bearing according to Claim 6, in which the outer deflection means (13) is provided on a cover layer (19) which is formed from the second material and is fastened on the supporting part (17).

## Revendications

1. Palier à roulement linéaire, comprenant un chariot de guidage (1) supporté sur rouleaux et déplaçable sur un rail de guidage (2), qui présente un corps porteur (3) et, au niveau des deux côtés frontaux du corps porteur (3), une pièce de tête respective (4), des corps de roulement circulant sans fin dans au moins un canal périphérique sans fin (8) du chariot de guidage (1), le canal périphérique (8) présentant une section de charge (10) dans laquelle roulent sous contrainte les corps de roulement sur des pistes de roulement (10a, 10b) du rail de guidage (2) et du chariot de guidage (1), et une section de retour (11), dans laquelle les corps de roulement sont ramenés sans contrainte, et deux sections de renvoi (12) reliant sans fin la section de charge et la section de retour, les corps de roulement étant déviés entre un renvoi extérieur (13) et un renvoi intérieur (14) de la section de renvoi (12), et le renvoi extérieur (13) étant prévu au niveau de la pièce de tête (4), **caractérisé en ce que** la pièce de tête (4) présente une partie porteuse (17), qui est formée d'un premier matériau ayant une plus faible flexibilité et le renvoi extérieur (13) prévu sur la partie porteuse (17) est formé d'un deuxième matériau ayant une plus grande flexibilité, la flexibilité étant indiquée par un quotient déterminé à partir du rapport de l'allongement à la rupture sur la tension de rupture, l'allongement à la rupture étant indiqué en pourcentage et la tension de rupture en mégapascal, la partie porteuse (17) étant prévue sous forme de structure porteuse pour le renvoi extérieur (13).

2. Palier à roulement linéaire selon la revendication 1, dans lequel le deuxième matériau prévu pour le renvoi extérieur (13) présente une flexibilité qui est supérieure en valeur absolue à 0,15.

3. Palier à roulement linéaire selon la revendication 1, dans lequel le premier matériau prévu pour la partie porteuse (17) présente une flexibilité qui est inférieure à 0,15, de préférence inférieure à 0,1 en valeur absolue.

4. Palier à roulement linéaire selon la revendication 1, dans lequel la pièce de tête (4) est fabriquée en plastique par un procédé de pulvérisation à plusieurs composants, l'un des composants étant constitué par le premier matériau pour la partie porteuse (17) et l'autre composant étant constitué par le deuxième matériau pour le renvoi extérieur (13).

5. Palier à roulement linéaire selon la revendication 1, dans lequel la pièce de tête (4) s'applique avec son côté de montage tourné vers le corps porteur (3) contre le côté frontal du corps porteur (3), le côté de montage de la pièce de tête (4) étant formé au niveau d'une couche extérieure (19) constituée du deuxième matériau, laquelle est réalisée sur la partie porteuse (17) de la pièce de tête (4).

6. Palier à roulement linéaire selon la revendication 1, dans lequel le renvoi extérieur (13) présente une rampe de levage (18) qui s'étend jusqu'à la bande de roulement (10) du rail de guidage (2).

7. Palier à roulement linéaire selon la revendication 6, dans lequel le renvoi extérieur (13) est prévu sur une couche extérieure (19) constituée du deuxième matériau, laquelle est fixée sur la partie porteuse (17).
